Europäisches Patentamt

European Patent Office

Office européen des brevets

(11) Publication number: **0 264 658**
**A1**

## (12) EUROPEAN PATENT APPLICATION

(21) Application number: **87114041.4**

(22) Date of filing: **25.09.87**

(51) Int. Cl.⁴ **A01N 35/02** ,
//(A01N35/02,31:14,31:08)

(30) Priority: **29.09.86 FI 863925**

(43) Date of publication of application:
**27.04.88 Bulletin 88/17**

(84) Designated Contracting States:
**AT BE CH DE ES FR GB GR IT LI LU NL SE**

(71) Applicant: **ORION-YHTYMÄ OY FERMION**
**P.O. Box 28**
**SF-02101 Espoo(FI)**

(72) Inventor: **Hakkila, Maini Annika**
**Pajalahdentie 4 B 37**
**SF-00200 Helsinki(FI)**
Inventor: **Nuojua, Ari Pekka**
**Kaunispääntie 3 A 1**
**SF-00970 Helsinki(FI)**

(74) Representative: **Weinhold, Peter, Dr. et al**
**Patentanwälte Dipl.-Ing. G. Dannenberg Dr.**
**P. Weinhold Dr. D. Gudel Dipl.-Ing. S.**
**Schubert Dr. P. Barz Siegfriedstrasse 8**
**D-8000 München 40(DE)**

(54) Liquid sterilizing composition.

(57) The invention concerns a liquid sterilizing composition with a broad activity spectrum, which as the active componeents contains phenoxy ethanol and, in addition, glutaraldehyde, formaldehyde or glyoxal, especially glutaraldehyde. The composition according to the invention contains as an activated solution 0.15 to 15 % by weight of phenoxy ethanol and 0.03 to 8 % by weight of glutaraldehyde, formaldehyde or glyoxal, as well as further per se known adjuvants.

EP 0 264 658 A1

## Liquid sterilizing composition

This invention concerns a liquid sterilizing composition especially for sterilizing heat sensitive instruments and similar medical equipment.

In health care there is a need for different methods and compositions for the disinfection and sterilization of apparatuses, instruments and other medical equipment used. Special requirements have to be met by instruments and similar equipment which are heat sensitive and which therefore cannot be sterilized using conventional heat treatment, for example in an autoclave. Examples of such instruments are endoscopes and fiberscopes.

In health care for disinfection purposes, on the one hand, agents are used which are effective only against some of the microbes (so called intermediate level disinfectants) therefore such agents commonly are used in conjunction with heat. Examples of such known products are the phenol derivatives, iodofores, chlorine derivatives, alcohols and biguanidines.

These agents are not, however, effective against all microbes and especially not against spores, which, as known, are highly resistant to sterilization. Thus there is a need also for such agents which destroy all kinds of microbes (so called high level disinfectants), including gram-positive and gram-negative bacteria, mycobacteria (e.g. Mycobacterium tuberculosis), bacterial spores, viruses, especially hepatitis B-and HIV-(Aids)-viruses, and fungi. Agents of this type exhibiting a higher degree of activity are for example peracetic acid, succinic acid, and various aldehydes, and of the latter, especially glutaraldehyde.

Glutaraldehyde has been used as disinfectant since the year 1963. Glutaraldehyde is as such acidic. According to the US patent 3,016,328 glutaraldehyde is activated to a spori cidal agent upon the addition of a suitable basic buffer (and an alcohol) at pH-values in the range of about 7.4 to 10.

Activated glutaraldehyde in a concentration of 2 % acts as a disinfectant (bacteria) after a 10 minute treatment, after a 30 minute treatment for example tubercular bacteria and HB virus are killed, but a sterilizing effect (bacterial spores) is obtained only after a 10 hour treatment. The alkaline solution is not stable and loses its activity due to polymerization of glutaraldehyde within two to four weeks.

The use of glutaraldehyde is, however, accompanied by a number of substantial drawbacks and it has even been considered a health risk to patients and medical staff. Even in the form of a 2 % solution, glutaraldehyde has a strong and unpleasant smell and it irritates the eyes and the mucous membranes. It is toxic to the skin, to the mucous membranes as well as is a potential allergen. Glutaraldehyde is absorbed and accumulated i.a. in rubber and plastics and thus exposes patients and medical staff also this way. Although glutaraldehyde, based on its $LD_{50}$-value (rat, orally 60 mg/kg) can be classified as a first class poison, it is still widely used as it is safest of the aldehydes for this purpose.

The US patent 4,103001 suggests i.a. prolonging the use span of a glutaraldehyde solution up to 30 days by using together with glutaraldehyde sodium phenolate, for the preparation of a cold sterilizing solution. This composition, when diluted for use, contains 0.75 to 4.0 % by weight of glutaraldehyde and a total of 4 to 15 % by weight of phenol and sodium phenolate, which at the pH of use, 7 to 7.4, is completely in the form of the phenolate. The composition may in addition contain in a known manner as adjuvants 1 to 5 % by weight of sodium tetraborate, 2 to 10 % by weight of a humectant (e.g. glycerol, diethylene glycol, propylene gylcol) and a tenside.

The afore mentioned composition is said to be a microbicide having a broad activity spectrum and due to the simultaneous use of two active agents (glutaraldehyde and phenolate) it is also said to be faster acting. Because it contains a tenside, it also has a cleansing effect. When used as a 2 % solution with respect to glutaraldehyde, the composition is said to exhibit a sporicidal effect within 6 3/4 hours. Contrary to conventional glutaraldehyde preparations, which cannot be diluted without a substantial loss in their activity, this known composition may be diluted, for example in a ratio of 1:16 (6% dilution). The sporicidal effect of the composition is, however, greatly weakened after the dilution.

By means of the known composition, it has not, however, been possible to eliminate all the drawbacks relating to the use of glutaraldehyde, of which one was already mentioned before, that is the loss of effect on diluting the composition. Another severe drawback is related to the use of phenol: also phenol is in itself poisonous ($LD_{50}$ rat, orally 530 mg/kg) and is an irritant and moreover easily absorbed through the skin. It also exhibits a strong smell which is not substantially weakened even when diluted and which thus for its own part adds to the smell load of glutaraldehyde on the environment.

The object of the present invention is to eliminate or at least substantially reduce the afore mentioned drawbacks while retaining the beneficial characteristics relating to the use of aldehydes.

Thus the object of the invention is an aqueous sterilizing composition which contains about 0.15 to 15 % by weight of phenoxyethanol and about 0.03 to 8 % by weight of glutaraldehyde, formaldehyde or glyoxal, and in addition, per se known adjuvants, such as buffers, humectants and/or tensides.

Of the aldehydes, glutaraldehyde is preferred.

The sterilizing composition according to the invention is prepared by forming in purified water a base solution which contains the phenoxy ethanol and the adjuvants, such as the buffer, humectant and the tenside. The concentration of the phenoxy ethanol in the base solution is suitably about 5 to 15 % by weight. The base solution is as such stable for years. Before use, this base solution is activated by adding thereto the aldehyde, such as glutaraldehyde, in the form of an aqueous solution in an amount corresponding to that required in the final product, whereby the solution may for example exhibit a concentration of 25 to 50 % with respect to glutaraldehyde.

The actived solution obtained may be used in an undiluted form but is usually diluted in water in a suitable ratio, for example in a ratio of about 1:2 to about 1:32,but preferably in a ratio of 1:16 (one part of activated solution diluted with 15 parts of water).

The concentration of the aldehyde, especially glutaraldehyde in the activated solution prior to the possible dilution thereof, is suitably about 1 to 8 % by weight. A concentration of 2 % by weight of glutaralldehyde in the activated but undiluted solution has proven to be appropriate in every respect, whereby its concentration after dilution in water in a ratio of 1:16 will be about 0.1 % by weight. This is very much lower than the dilutions previously in use. An advantageous amount of phenoxy ethanol in the activated solution is about 10 to 12 % by weight, whereby its concentration after a 1:16 dilution will be about 0.6 to 0.8 % by weight. According to the invention a liquid sterilizing com position thus has been obtained which irrespective of a low concentration of active agent still is very effective.

Phenoxy ethanol is compared to phenol almost odourless and considerably less toxic ($LD_{50}$ rat, orally 5500 mg/kg). Further, possible exposure risks resulting from the absorption of phenol through the skin are avoided. Thus the composition according to the invention is both considerably less odorous and less toxic compared to the known composition containing phenol and glutaraldehyde.

Part of the phenoxy ethanol, for example up to 50 % by weight, may, however, be substituted by a phenolate, or by a chlorinated phenol derivative, such as by sodium-p-chloro-m-cresolate and/or sodium-p-chloro-m-xylenolate.

Of the adjuvants come into question as buffers for example sodium tetraborate, which in the undiluted solution may be included in an amount of about 1 to 5 % by weight, preferably 1 to 2 % by weight, as a humectant glycol derivatives, for example glycerol, diethylene glycol, propylene glycol, etc., which may be present in an amount of about 2 to 10 % by weight, preferable about 5 to 7 % by weight. As tensides, anionic or non-ionic tensides, such as sodium dodecylbenzenesulfonate and sodium cocoylsarcosinate come into question in an amount of about 10 to 25 % by weight, suitably about 15 to 20 % by weight. The said adjuvants and the amounts indicated are not critical with respect to the invention, and the choice thereof is rather dictated by manufacturing and use aspects. The pH of the composition in a 1:16 dilution is about 7 to 8.

As mentioned earlier, the liquid sterilizing composition according to the invention exhibits a good microbicidal, that is bactericidal, virucidal and sporicidal activity also in large dilutions, for example in a glutaraldehyde concentration of about 0.1 % by weight, at which dilution the composition is practically odourless and non-corrosive. Compared to known preparations, it is also less irritating to the respiratory tract and the eyes. Also its toxicity to the skin and the mucuous membranes as well as its oral toxicity is weaker. In corrosive tests carried out so far no detrimental effects have been found when using normal soaking times.

## Testing of the microbicidal effect

In order to show the bactericidal activity the so called Kjellander test was used, which is a test commonly used in Sweden and Finland for soaking desinfectant preparations, as well as the turbidometric method for kinetic determination of the bacterial growth. The virucidal effect was tested against monkey rota-virus and polio-virus. The sporicidic effect was tested with the AOAC-method against Bacillus subtilis and Clostridium sporogenes spores.

## Bactericidic effect

A. The test was carried out using the Kjellander method. which in principle is as follows:

On glass plates horse blood is spread to an even layer, whereafter they are dried at room temperature and in a warm-air cabinet. Onto the surface of the glass a mixture of horse blood and bacterial cell suspension is thereafter distributed. After drying for 90 minutes at room temperature the glasses are immersed into the disinfectant solution, to which has been added 0.1 % of animal albumin and Ca-and Mg-salts for increasing the hardness of the water. After disinfection, the glasses are removed from the disinfectant solu tion, are immersed in a neutralizing solution and transferred to a fresh meat broth. The flask is shaken in a shaker, whereby the bacteria on the glasses are stripped off into the solution, from which their number are measured.

The bacteria used in the tests were the following: Staph. aureus NCTC 4163, Streptococcus faecalis (English unnumbered strain), Proteus vulgaris NCTC 4635 and Pseudomonas aeruginosa NCTC 6749.

The following test results were obtained:

## Inactivation coefficient

| Time | Staphylococcus aureus | Streptococcus faecalis | Pseudomonas aeruginosa | Proteus vulgaris |
|---|---|---|---|---|
| 30 min | $3.6 \times 10^6$ | $2.1 \times 10^5$ | $4.4 \times 10^6$ | $1.4 \times 10^6$ |

An inactivation coefficient of $10^5$ -$10^6$ is considered good for a desinfectant.

B. Kinetic assay of bacterial growth

A test series was carried out using 5 bacterial strains: Pseudomonas aeruginosa (NCTC 6749), Staphylococcus aureus (NCTC 4163), Bacillus subtilis (NCTC 3610), Candida albicans (VTT C-75003) and Streptococcus faecalis (own strain). As the liquid medium an Iso-Sensitest-solution (Oxoid) was used for Pseudomonas, Bacillus and Streptococcus. Staphylococcus aureus was cultured in Brain-Heart-medium (Difco) and Candida albicans in Malt extract broth (Difco).

The growth of the bacteria was followed turbidometrically for 24 hours at 37°C. As the control instead of the desinfectant a physiological NaCl-solution was used.

From the kinetic assay of the bacterial growth the lag-stage (detection time), the angular coefficient of the bacterial growth (the smaller the angular coefficient the more effective agent) and maximum turbidity were registered. The results are given in the Table I.

From the Table I may be seen that the activated undiluted base solution having the composition according to the Example 1 was more effective than the composition according to the Example A of the US patent 4,103,001 (in the following "reference solution"), on the other hand the dilutions (1/16) were equally effective. The effect of 2 % activated buffered glutaraldehyde was worse than that of the activated base solution.

Not one of the test bacterial strains was resistant to the activated solution. Blood did not inactivate the activated solutions.

## Table I

| Test series | lag-stage | Angular coeff. | Maximum turbidity |
|---|---|---|---|
| **B. subtilis** | | | |
| activated base soln | no growth | no growth | no growth |
|     -blood | no growth | no growth | no growth |
| activated base soln (1/16) | no growth | no growth | no growth |
|     -blood | no growth | no growth | no growth |
| activated reference soln | 0 | 0.07 | 0.36 |
|     -blood | | O.14 | 0.37 |
| activated reference soln (1/16) | no growth | no growth | no growth |
|     -blood | 0 | 0.05 | 0.32 |
| activated 2% glutaraldehyde | 0 | 0.06 | 0.42 |
|     -blood | 0 | 0.05 | 0.39 |
| control | 0 | 0.16 | 0.41 |
| **Candida albicans** | | | |
| activated base soln | no growth | no growth | no growth |
|     -blood | no growth | no growth | no growth |
| activated base soln (1/16) | no growth | no growth | no growth |
|     -blood | no growth | no growth | no growth |
| activated reference soln | no growth | no growth | no growth |
|     -blood | 0 | 0.08 | 0.33 |
| activated reference soln (1/16) | no growth | no growth | no growth |
|     -blood | 0 | 0.01 | 0.30 |
| activated 2% glutaraldehyde | 3.1 | 0.07 | 0.42 |
|     -blood | 0.11 | 0.06 | 0.47 |
| control | 0 | 0.10 | 0.57 |

## Table I (continued)

| Test series | lag-stage | Angular coeff. | Maximum turbidity |
|---|---|---|---|
| **S. aureus** | | | |
| activated base soln | 0 | 0.43 | 0.48 |
|        -blood | 0 | 0.32 | 0.44 |
| activated base soln (1/16) | 0 | 0.23 | 0.44 |
|        -blood | 0 | 0.17 | 0.43 |
| activated reference soln | 0 | 0.42 | 0.63 |
|        -blood | 0 | 0.33 | 0.51 |
| activated reference soln (1/16) | 0 | 0.07 | 0.38 |
|        -blood | 0.03 | 0.21 | 0.42 |
| activated 2% glutaraldehyde | 0 | 0.42 | 0.55 |
|        -blood | 0 | 0.38 | 0.48 |
| control | 0 | 0.26 | 0.64 |
| **Ps. aeruginosa** | | | |
| activated base soln | 0 | 0.26 | 0.40 |
|        -blood | 0 | 0.35 | 0.36 |
| activated base soln (1/16) | 0 | 0.28 | 0.45 |
|        -blood | 0.17 | 0.22 | 0.41 |
| activated reference soln | 0 | 0.51 | 0.95 |
|        -blood | 0 | 1.23 | 0.63 |
| activated reference soln (1/16) | 0 | 0.19 | 0.43 |
|        -blood | no growth | no growth | no growth |
| activated 2% glutaraldehyde | 0 | 0.36 | 0.51 |
|        -blood | 0 | 0.17 | 0.40 |
| control | 0 | 0.35 | 1.56 |

## Table I (continued)

| Test series | lag-stage | Angular coeff. | Maximum turbidity |
|---|---|---|---|
| Str. faecalis | | | |
| activated base soln | 0 | 0.19 | 0.40 |
|       -blood | 0 | 0.08 | 0.34 |
| activated base soln (1/16) | 0 | 0.11 | 0.38 |
|       -blood | 0 | 0.25 | 0.46 |
| activated reference soln | 0 | 0.46 | 0.54 |
|       -blood | 0 | 0.51 | 0.50 |
| activated reference soln (1/16) | 0 | 0.07 | 0.38 |
|       -blood | 0 | 0.26 | 0.48 |
| activated 2% glutaraldehyde | 0 | 0.32 | 0.44 |
|       -blood | 0 | 0.26 | 0.40 |
| control | 0 | 0.52 | 0.53 |

Virucidal effect

The virucidal effect was tested using monkey rota virus (SA-11) whereby the infectivity of the virus preparation was $3.0 \times 10^7$ and polio-virus, whereby the infectivity was of the order of $10^6$.

The test was carried out by adding equal amounts of disinfectant and virus suspension into a tube and by mixing thoroughly. After the desired time (usually 20 minutes, room temperature) a dilution series was prepared ($10^{-1} - 10^{-7}$).

The virus concentrations in the dilutions were determined in cell cultures (monkey kidney cells, MA 104) and the cell destruction caused by the virus was followed with a microscope.

The effect of the disinfectants on rota-and polio-virus without organic load and in the presence of organic load.

| ROTA<br>Product | Org.<br>load | Dilu-<br>tion | Contact<br>time<br>(min) | Cell<br>tox.<br>limit | Titer<br>treated/<br>control | Clears<br>test<br>+=yes<br>-=no |
|---|---|---|---|---|---|---|
| Product of | − | 1:16 | 20 | $10^2$ | $\leq 10^2/10^7$ | + |
| Example 1 | + | 1:16 | 10 | | $\leq 10^2/10^7$ | + |
| 2% activated | − | − | 20 | $10^3$ | $\leq 10^3/10^7$ | + |
| glutar- | + | − | 10 | | $\leq 10^3/10^7$ | + |
| aldehyde | | | | | | |
| **POLIO** | | | | | | |
| Product of | − | 1:16 | 30 | $10^2$ | $10^2/10^6$ | + |
| Example 1 | + | 1:16 | 30 | $10^2$ | $10^2/10^6$ | + |
| 2% activated | − | − | 10 | $10^3$ | $<10^3/10^6$ | + |
| glutar- | + | − | 10 | | $10^2/10^6$ | + |
| aldehyde | | | | | | |

## Sporicidic effect

The sporicidic effect was tested using as the test bacteria Bacillus subtilis (ATCC 605) and Clostridium sporogenes (ATCC 7955) strains. The resistivity of the spores was tested using the AOAC acid test (4.035). The product of the Example 1 was tested both as an activated solution, as well as a 1/16 dilution with a treatment period of 3 hours.

The test was carried out using the revised instructions (4.033 - 4.035) of AOAC (Association of Official Analytical Chemists, USA) according to which the spores of the test bacteria were separated, their acid resistivity in 2.5 N HCl was tested and treated for a period of three hours with the preparation to be tested, whereafter the spores were incubated at 37°C for 21 days, thereafter heat shock treated and possible growth was assayed.

The preparation being tested passed, both as an activated solution and as a 1/16 dilution, the AOAC spore test for both bacterial strains.

The following examples illustrate the invention.

## Example 1

A sterilizing composition was prepared using as the base solution the following composition, whereby the % indicated denote % by weight of the component in question in the activated solution.

A. Phenoxy ethanol    11.7 %

Sodium tetraborate, anhydrous   1.25 %
Diethylene glycol   6.3 %
Sodium cocoylsarcosinate   11.0 %
Sodium dodecylbenzenesulfonate   8.6 %
purif. water ad   0,92 kg

The pH of the solution A was adjusted to 7.0 to 7.4 with a small amount of hydrochloric acid. For activation purposes this base solution was mixed with the components B:

B. Glutaraldehyde(25 %)   80 g

The activated solution obtained contained about 2 % of glutaraldehyde. It was diluted with water in a ratio of 1:16 (1 part of activated solution, 15 parts of water) in order to prepare a solution containing about 0.1 % of glutaraldehyde.

Example 2

In accordance with the Example 1 a sterilizing composition was prepared which had the same base solution A as in the Example 1 but wherein for activation a 50 % glutaraldehyde solution was used. Thus the glutaraldehyde concentration of the activated solution was 4 % which after a 1:16 dilution was about 0.25 %.

Example 3

According to the Example 1 a sterilizing composition may be prepared using as the base solution that of Example 1, however, so that the amount of purified water is ad 0.945 kg. For activation, this solution is mixed with the component B:

B. Formaldehyde (37%)   55 g.

The activated solution contains about 2 % formaldehyde. It is diluted with water in a ratio of 1:16 in order to prepare a solution containing about 0.1 % of formaldehyde.

Example 4

According to the Example 1 a sterilizing composition may be prepared using as the base solution that of Example 1, however, so that the amount of purified water is ad 0.935 kg. For activation, this solution is mixed with the component B:

B. Glyoxal (30%)   65 g

The activated solution contains about 2 % glyoxal. It is diluted with water in a ratio of 1:16 in order to prepare a solution containing about 0.1 % of glyoxal.

Example 5

According to the Example 1 a sterilizing composition may be prepared using the following composition.

A. Phenoxy ethanol   4.0 %
   p-Chloro-m-cresol   4.0 %
   Sodium hydroxide   0.15 %
   Sodium tetraborate, anhydrous   1.25 %
   Diethylene glycol   6.3 %
   Sodium cocoylsarcosinate   11.0 %

Sodium dodecylbenzenesulfonate    8.6 %
purif. water    ad 0,92 kg

The pH of the solution A is adjusted to 7.0 to 7.4 with a small amount of hydrochloric acid. For activation, this base solution is mixed with the component B:

B. Glutaraldehyde (25 %)    80 g

The activated solution obtained contains about 2 % of glutaraldehyde. It is diluted with water in a ratio of 1:16 in order to prepare a solution containing about 0.1 % of glutaraldehyde.

Example 6

According to Example 1 a sterilizing composition may be prepared using the following composition.

A. Phenoxy ethanol    2.7 %
   p-Chloro-m-cresol    2.7 %
   p-Chloro-m-xylenolate    2.7 %
   Sodium tetraborate, anhydrous 1.25 %
   Diethylene glycol    6.3 %
   Sodium cocoylsarcosinate    11.0 %
   Sodium dodecylbenzenesulfonate    8.6 %
   purif. water    ad 0,92 kg

The pH of the solution A is adjusted to 7.0 to 7.4 with a small amount of hydrochloric acid. For activation, this base solution is mixed with the component B:
B. Glutaraldehyde (25 %)    80 g

The activated solution contains about 2 % glutaraldehyde. It is diluted with water in a ratio of 1:16 in order to prepare a solution containing about 0.1 % of glutaraldehyde

Example 7

A sterilizing composition having a base solution of the following composition.

A. Phenoxy ethanol    4.0 %
   Phenol    4.0 %
   Sodium hydroxide    0.2 %
   Sodium tetraborate, anhydrous    1.25 %
   Diethylene glycol    6.3 %
   Sodium cocoylsarcosinate    11.0 %
   Sodium dodecylbenzenesulfonate    (65%) 8.6 %
   purif. water    ad 0.92 kg

The pH of the solution A is adjusted to 7.0 to 7.4 with a small amount of hydrochloric acid. For activation, this base solution is mixed with the component B:

B. Glutaraldehyde (25 %)    80 g

The activated solution contains about 2 % glutaraldehyde. It is diluted with water in a ratio of 1:16 in order to prepare a solution containing about 0.1 % of glutaraldehyde.

**Claims**

1. Aqueous sterilizing composition which contains about 0.15 to 15 % by weight of phenoxy ethanol and about 0.03 to 8 % by weight of glutaraldehyde, formaldehyde or glyoxal, and, in addition, per se known adjuvants, such as a buffer, humectant and/or tenside.

2. Composition according to the Claim 1,
**characterized** in that it contains glutaraldehyde.

3. Composition according to the Claim 2,
**characterized** in that it contain 0.6 to 0.8 % by weight of phenoxy ethanol and about 0.1 % by weight of glutaraldehyde.

4. Composition according to any one of the Claims 1 to 3
**characterized** in that it as a buffer contains anhydrous sodium tetraborate, as a humectant diethylene glycol and as a tenside sodium dodecylbenzenesulfonate and/or sodium cocoylsarcosinate.

5. Composition according to any of the claims 1 to 4,
**characterized** in that the phenoxy ethanol is replaced by a phenolate or by a chlorinated phenol derivative, e.g. a phenolate substituted by e.g. chlor and/or methyl group(s).

6. Composition according to claim 5,
**characterized** in that up to 50 % by weight of the phenoxy ethanol are replaced.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | US-A-4 103 001  (R.I. SCHATTNER) <br> * Claims * | 1-6 | A 01 N  35/02 // <br> (A 01 N  35/02 <br> A 01 N  31:14 <br> A 01 N  31:08 ) |
| A | GB-A-2 138 798  (DEARBORN CHEMICALS LTD) <br> * Claims 1,2,6-8 * | 1-6 | |
| A | SEIFEN-ÖLE-FETTE-WACHSE, vol. 99, no. 18, 30th August 1973, pages 489-492, Augsburg, DE; G. SCHUSTER: "Die Konservierung von Shampoos und Schaumbademitteln" <br> * Page 490, right-hand column, line 47 - page 491, left-hand column , line 15; page 491, right-hand column, line 32 - page 492, right-hand column, line 2 * | 1-6 | |
| A | US-A-4 057 648  (G. HOOL et al.) <br> * Column 4, lines 10-68; column 6, lines 28-34; claims * | 1-6 | |
| A | GB-A-1 432 324  (SCHÜLKE & MAYR) <br> * Page 1; lines 69-91; claims * | 1-6 | TECHNICAL FIELDS SEARCHED (Int. Cl.4) <br><br> A 01 N |

The present search report has been drawn up for all claims

| Place of search | Date of completion of the search | Examiner |
|---|---|---|
| THE HAGUE | 15-01-1988 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P0401)